# EUROPEAN PATENT APPLICATION

(11) **EP 2 189 984 A1**
(43) Date of publication of application: **26.05.2010**
(21) Application number: 08831027.1
(22) Date of filing: 09.09.2008
(51) Int. Cl.: G11B 20/12, G11B 7/007, G11B 20/10, G11B 27/00

(54) **INFORMATION RECORDING MEDIUM, RECORDING/REPRODUCTION DEVICE, AND MANAGEMENT INFORMATION RECORDING METHOD**

(30) Priority: 10.09.2007 JP 2007234710
(71) Applicant: Sharp Kabushiki Kaisha, Osaka-shi, Osaka 545-8522 (JP)
(72) Inventor: AKIYAMA, Jun, Osaka-shi Osaka 545-8522 (JP)
(74) Representative: Müller - Hoffmann & Partner
(86) International application number: PCT/JP2008/066258
(87) International publication number: WO 2009/034973

(57) **Abstract**

In order for even an information recording medium having two or more recording layers to be capable of quick and appropriate recording/reproduction, the information recording medium includes layers (L0 to L2), and a 96-cluster recording area constituted by defect management areas (DMA1-0 to DMA1-2) on the layers (L0 to L2) is divided into areas in which to record seven pieces of information, namely a disc definition structure (DDS) and defect lists (DFL1 to DFL6). The disc definition structure (DDS) and the defect lists (DFL1 to DFL6) are each placed as a continuous area on an identical recording layer according to the recording capacity of the defect management areas (DMA1-0 to DMA1-2) to such a limit as to be able to be placed without interlayer separation.

## Description

### Technical Field

The present invention relates to an information recording media, recording/reproduction devices, and management information recording methods and, in particular, to management information on an information recording medium having a plurality of recording layers, a recording/reproduction device for an information recording medium with use of such management information, and a management information recording method for recording such management information on an information recording medium.

### Background Art

In recent years, there have been dramatic increases in amounts of digital information along with digitalization of various types of information such as image information and audio information. Accordingly, there have been advances in development of optical discs and optical disc recording/reproduction devices suitable for larger capacity and higher density.

For example, image information that is recorded on an optical disc includes valuable information such as privately-shot image information and image information purchased via a network; therefore, a technique for correctly recording/reproducing such information is important. In the case of an optical disc, the optical disc may have its surface scratched. Such an area cannot be used for recording/reproduction, and therefore is treated as a defect area. Since recording/reproduction cannot be performed on the defect area, recording/reproduction is performed on an alternate area (spare area); that is to say, a spare process is performed.

As a conventional technique concerning such a spare process, Patent Literature 1 discloses a method for arranging and using management information for use in a spare process.

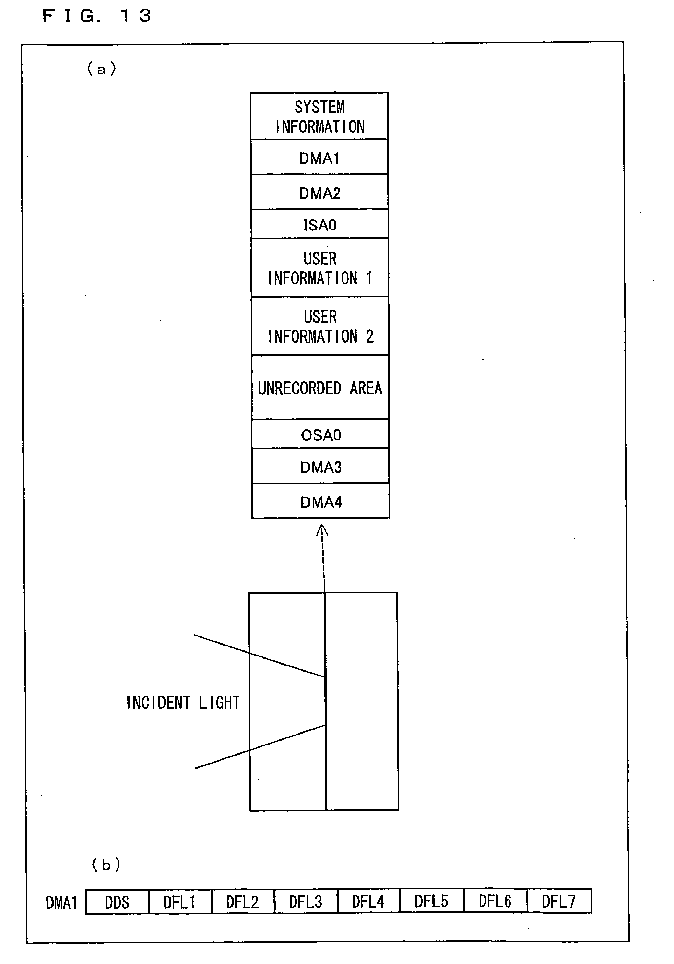

The method of Patent Literature 1 for arranging and using management information for use in a conventional spare process is described below with reference to (a) of Fig. 13 and (b) of Fig. 13.

As shown in (a) of Fig. 13, an optical disc disclosed in Patent Literature 1 includes only one recording layer having thereon a recording area in which to record various types of information.

(a) of Fig. 13 shows an information table of the various types of information recorded in the recording area on the recording layer. The various types of information are described below in detail.

First, the system information is information necessary for an optical disc recording/reproduction device to properly execute various types of control. Examples of the system information recorded include recording/reproduction conditions.

The defect management areas (the term "defect management area" being hereinafter sometimes omitted for simplicity) DMA1 to DMA4 are areas in which to record information for performing defect management, i.e., management information for use in a spare process. Specifically, in cases where a defect such as a scratch makes a recording area on the optical disc incapable of recording/reproduction, the address of the area (defect area) made incapable of recording/reproduction is recorded as defect information in DMA1 to DMA4. Furthermore, in cases where a spare area is prepared to replace the defect area, the address of the spare area is recorded in DMA1 to DMA4.

The inner spare area (the term "inner spare area" being hereinafter sometimes omitted for simplicity) ISA0 and the outer spare area (the term "outer spare area" being hereinafter sometimes omitted for simplicity) OSAO are areas in which to record information through a spare process, i.e., spare areas.

The information table shown in (a) of Fig. 13 has only user information 1 and user information 2 recorded in a user recording area, the remaining portion of which serves as an unrecorded area.

For each of the areas DMA1 to DMA4, an area corresponding to 32 clusters is secured. A cluster means a minimum unit capable of recording/reproduction, and one cluster equals 64K bytes. Next, the arrangement of information that is recorded in each area DMA is shown in (b) of Fig. 13.

Recorded in the first four clusters of DMA1 is a disc definition structure DDS (the term "disc definition structure" being hereinafter sometimes omitted for simplicity). Recorded in four clusters following DDS is a defect list (the term "defect list" being hereinafter sometimes omitted for simplicity) DFL1. Recorded sequentially in the subsequent clusters are DFL2 to DFL7. DFL2 is used in place of DFL1 in cases where recording cannot be performed on DFL1 or in cases where DFL1 has been overwritten a predetermined number of times or more. DFL3 to DFL7 are similarly used one after another.

However, the conventional method for arranging and using management information is targeted at an optical disc having only one layer. Unfortunately, nothing has been disclosed regarding a method for arranging and using management information on an optical disc having two or more layers.

### Citation List

### Patent Literature 1

Japanese Patent Application Publication, Tokukai, No. 2004-14088 A (Publication Date: January 15, 2004)

### Summary of Invention

The present invention has been made in view of the foregoing conventional problems, and it is an object of the present invention to provide, e.g., an information recording medium having two or more recording layers and yet being capable of quick and appropriate recording/ reproduction.

In order to solve the foregoing problems, an information recording medium of the present invention is an information recording medium including a plurality of recording layers having thereon management areas divided into a plurality of management information recording areas, the management areas being recording areas on the plurality of recording layers in which to record management information for managing recording and reproduction of information on the information recording medium, the plurality of management information recording areas having each been placed as a continuous area on an identical layer according to at least a recording capacity of the management areas to such a limit as to be able to be placed without interlayer separation.

Further, in order to solve the foregoing problems, a management information recording method of the present invention is an management information recording method for an information recording medium including a plurality of recording layers having thereon management areas divided into a plurality of management information recording areas, the management areas being recording areas on the plurality of recording layers in which to record the management information for managing recording and reproduction of information on the information recording medium, the management information method recording the management information on the information recording medium, the management information recording method including the step of recording each of the plurality of management information recording areas as a continuous area on an identical layer according to at least a recording capacity of the management areas to such a limit that the management information recording area is able to be placed without interlayer separation.

According to the foregoing configuration and method, the information recording medium includes a plurality of recording layers having thereon management areas divided into a plurality of management information recording areas, the management areas being recording areas on the plurality of recording layers in which to record the management information for managing recording and reproduction of information on the information recording medium.

Incidentally, in cases where a particular management information recording area extends across more than one layers (recording layers), it becomes necessary to move the scanning light spot location between one layer and another, i.e., to make an interlayer jump, in order to read all management information (set of management information), such as defect management, necessary for management of recording/reproduction on the information recording medium.

Such an interlayer jump makes it necessary to make an optical adjustment and the like to a change in cover layer thickness in addition to moving the scanning light spot location between one layer and another, thus requiring a long time.

Furthermore, in recording such management information on the information recording medium through the optical disc recording/reproduction device, it is necessary to first record a portion of the management information on a particular recording layer and then record the remaining portion of the management information on another recording layer. However, an erroneous operation of powering down the recording/reproduction device before completion of the recordings leaves the management information only partly updated. Because appropriate management of recording/reproduction on the information recording medium, such as a spare process, cannot be performed with such incomplete management information, it becomes completely impossible to perform recording/reproduction on the information recording medium.

Accordingly, in the information recording medium or management information recording method of the present invention, the plurality of management information recording areas have each been placed or are each placed as a continuous area on an identical layer according to at least the recording capacity of the management areas to such a limit as to be able to be placed without interlayer separation.

According to the foregoing configuration or method, a management information recording area is placed as a continuous area on an identical layer according to at least the recording capacity of the management areas to such a limit as to be able to be placed without interlayer separation. This makes it unnecessary to make an interlayer jump and possible to perform recording or reproduction on the management information in a short amount of time. Further, since the management information is recorded in a continuous area, the recording is completed in a short amount of time. This greatly reduces the probability of occurrence of an erroneous operation, for example, of turning off the power in the process of recording.

As described above, when a management information recording area in management areas is placed as a continuous area on an identical recording layer according to the recording capacity of the management areas to such a limit as to be able to be placed without interlayer separation, preferential use of the continuous area on the identical layer makes it hardly necessary to make an interlayer jump, thus making quick recording/reproduction possible.

This makes it possible to provide an information recording medium having two or more recording layers and yet being capable of quick and appropriate recording/ reproduction.

Further, in order to solve the foregoing problems, a recording/reproduction device of the present invention is a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/reproduction device recording each of the plurality of management information recording areas as a continuous area on an identical layer according to at least a recording capacity of the management areas to such a limit that the management information recording area is able to be placed without interlayer separation.

According to the foregoing configuration, the recording/reproduction device records each of the plurality of management information recording areas as a continuous area on an identical layer, if at all possible, according to at least the recording capacity of the management areas to such a limit that the management information recording area is able to be placed without interlayer separation.

Therefore, the recording/reproduction device is configured so that what has been described of the aforementioned information recording medium and management information recording method can be similarly realized. This makes it possible to provide a recording/reproduction device for an information recording medium having two or more recording layers and yet being capable of quick and appropriate recording/reproduction.

Further, in order to solve the foregoing problems, a recording/reproduction device of the present invention is a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/ reproduction device preferentially using an area, among the plurality of management information recording areas, which is placed as a continuous area on an identical layer.

According to the foregoing configuration, a management information recording area where management information can be recorded continuously on an identical layer is preferentially used and, after the management information recording area is exhausted, a management information recording area separated between more than one layers is used. This makes it possible to prevent an increase in recording/reproduction time due to an interlayer jump, and to increase the total number of times the management information recording areas are overwritten.

Further, in order to solve the foregoing problems, a recording/reproduction device of the present invention is a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/reproduction device including: management information acquisition means that acquires the management information preferentially from an area, among the plurality of management information recording areas, which is placed as a continuous area on an identical layer; and propriety judging means that judges whether or not the management information acquired by the management information acquisition means has been properly acquired, when the propriety judging means judges that the management information has not been properly acquired, the management information acquisition means acquires the management information from a management information recording area of next priority.

According to the foregoing configuration, the management information acquisition means acquires the management information preferentially from an area, among the plurality of management information recording areas, which is placed as a continuous area on an identical layer; and propriety judging means that judges whether or not the management information acquired by the management information acquisition means has been properly acquired.

It should be noted here that possible examples of "cases where the management information is not properly acquired" include cases where recording has failed due to a defect in laser power at the time of recording and cases where there exits a defect in the management information recording area. Even in such a case, the management information recording area is not subjected to a spare process unlike a user recording area; therefore, the management information is not properly acquired.

Further, when the propriety judging means judges that the management information has not been properly acquired, the management information acquisition means acquires the management information from a management information recording area of next priority.

With all this, when a management information recording area where management information can be recorded continuously on an identical layer is preferentially used and, after the management information recording area is exhausted, a management information recording area separated between more than one layers is used, it is possible to prevent an increase in recording/reproduction time due to an interlayer jump, and to increase the total number of times the management information recording areas are overwritten.

Further, since the propriety judging means judges whether or not the management information has been properly acquired, it becomes possible to acquire the management information in an appropriate management information area.

All this makes it possible to provide, e.g., an information recording medium having two or more recording layers and yet being capable of quick and appropriate recording/ reproduction.

For a fuller understanding of the nature and advantages of the invention, reference should be made to the ensuing detailed description taken in conjunction with the accompanying drawings.

### Brief Description of Drawings

Fig. 1

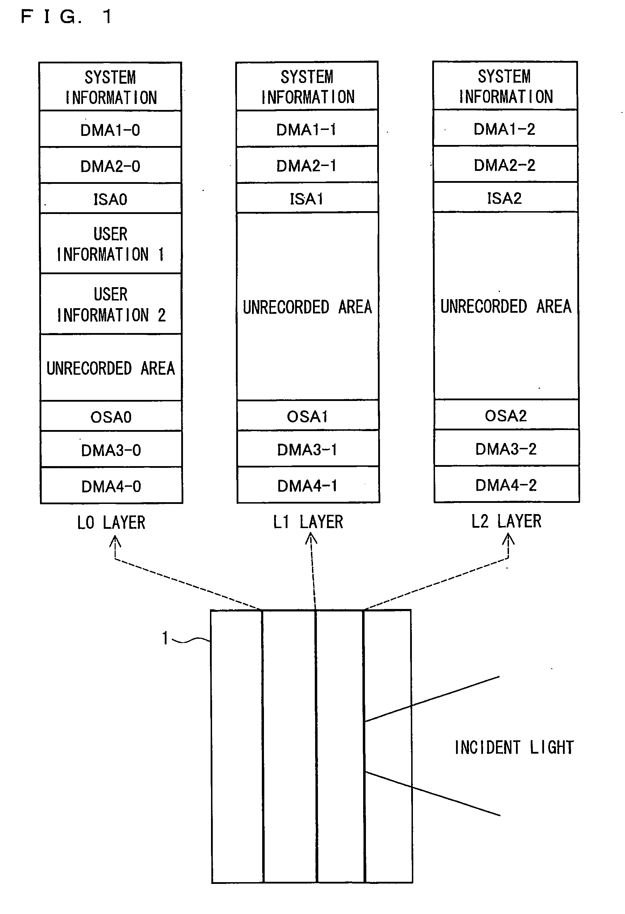

   Fig. 1 is a pattern diagram of various types of information recorded on layers L0 to L2 of an information recording medium according to an embodiment of the present invention.
Fig. 2

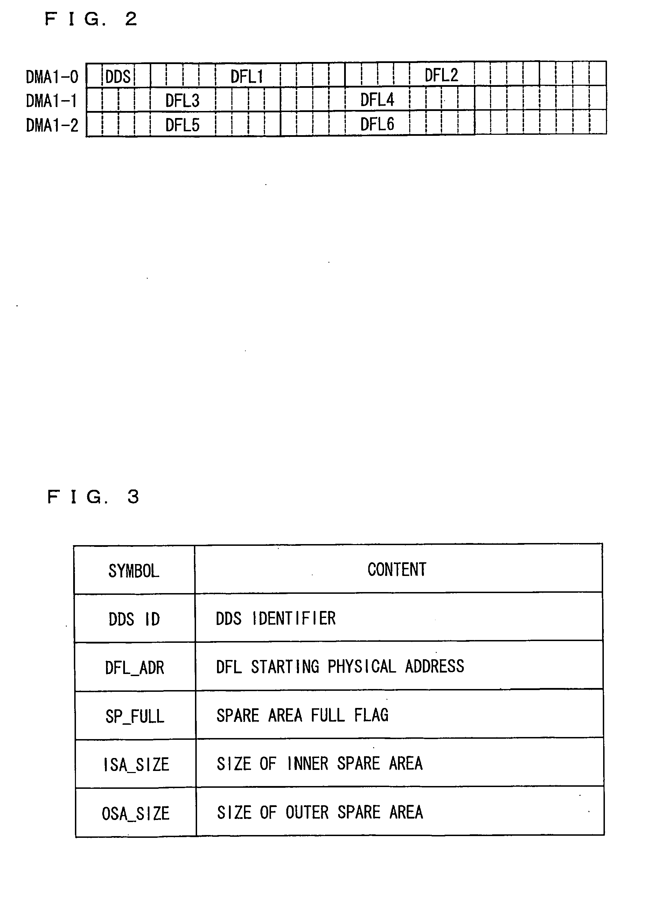

   Fig. 2 is a pattern diagram of management information recorded on each layer of the information recording medium.
Fig. 3
   Fig. 3 is a pattern diagram showing the details of the content of DDS information recorded on the information recording medium.
Fig. 4

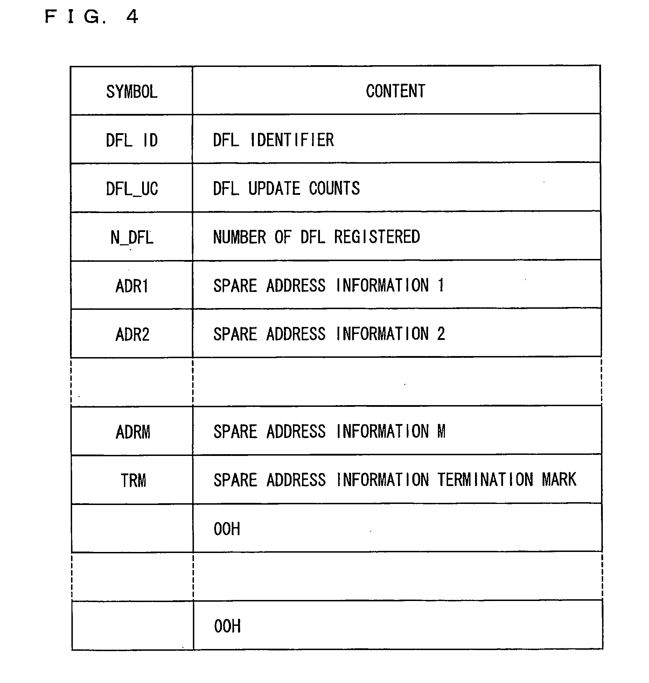

   Fig. 4 is a pattern diagram showing the details of the content of DFL information recorded on the information recording medium.
Fig. 5

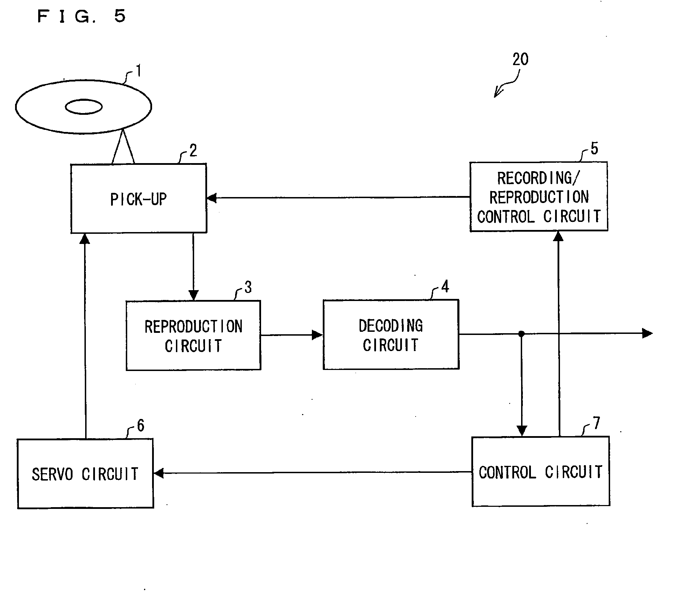

   Fig. 5 is a block diagram schematically showing the configuration of a recording/reproduction device according to an embodiment of the present invention.
Fig. 6

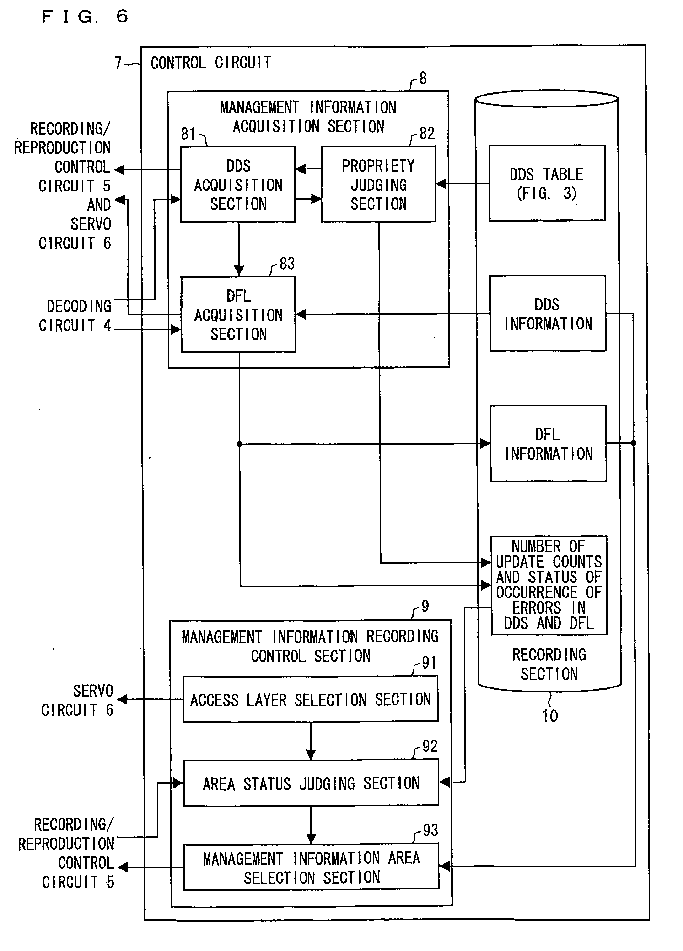

   Fig. 6 is a block diagram showing the configuration of a control circuit of the recording/reproduction device.
Fig. 7

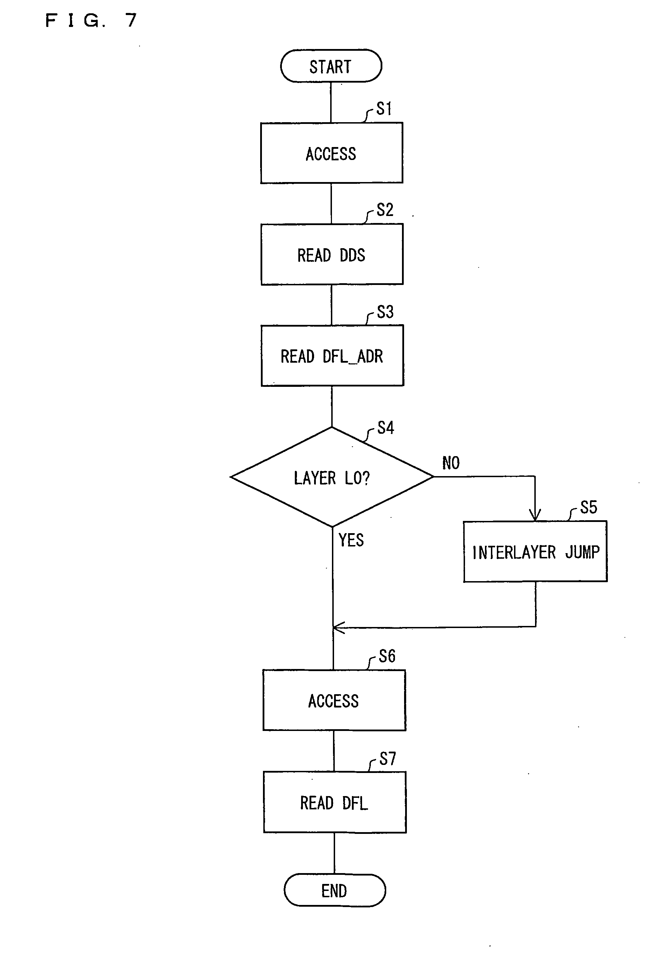

   Fig. 7 is a flow chart showing how the recording/reproduction device operates.
Fig. 8

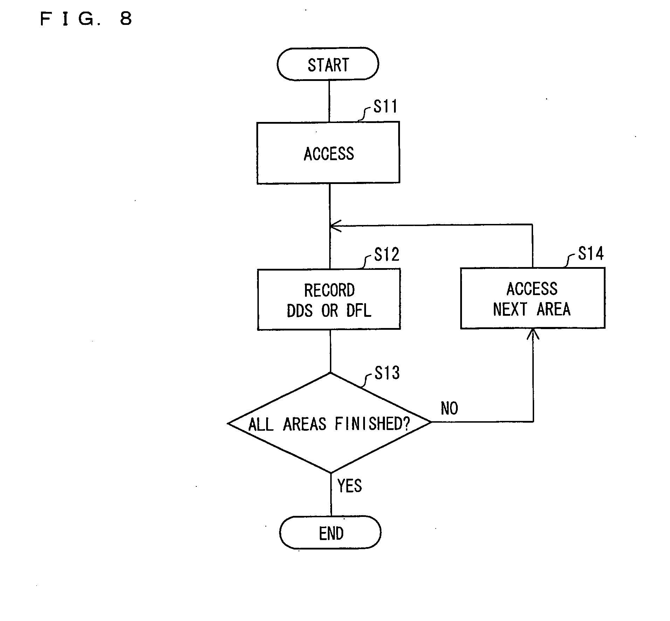

   Fig. 8 is a flow chart showing how the recording/reproduction device operates.
Fig. 9

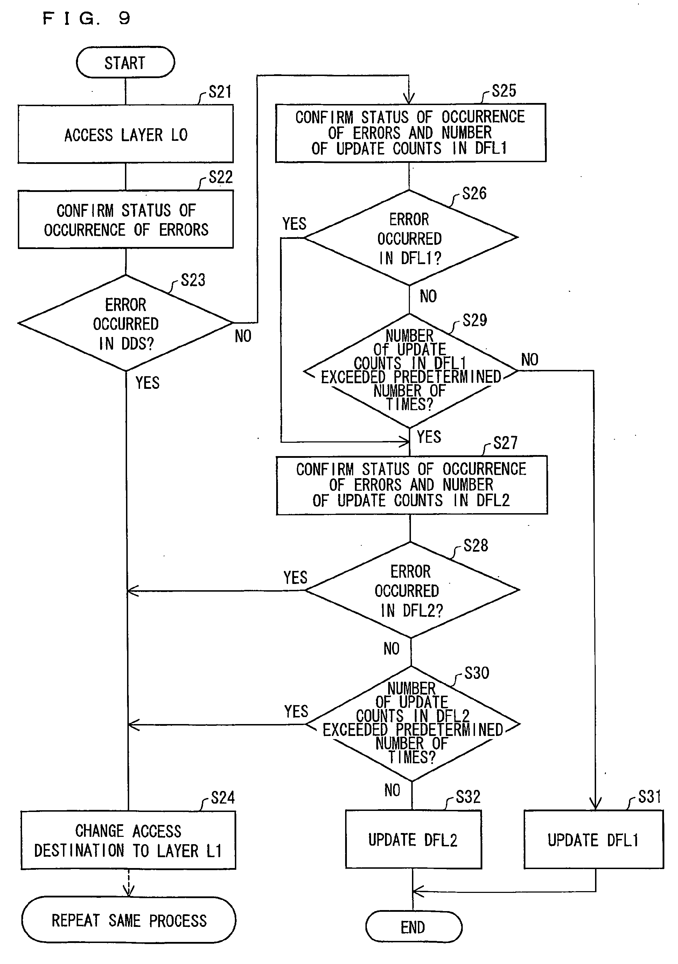

   Fig. 9 is a flow chart showing how the recording/reproduction device operates.
Fig. 10

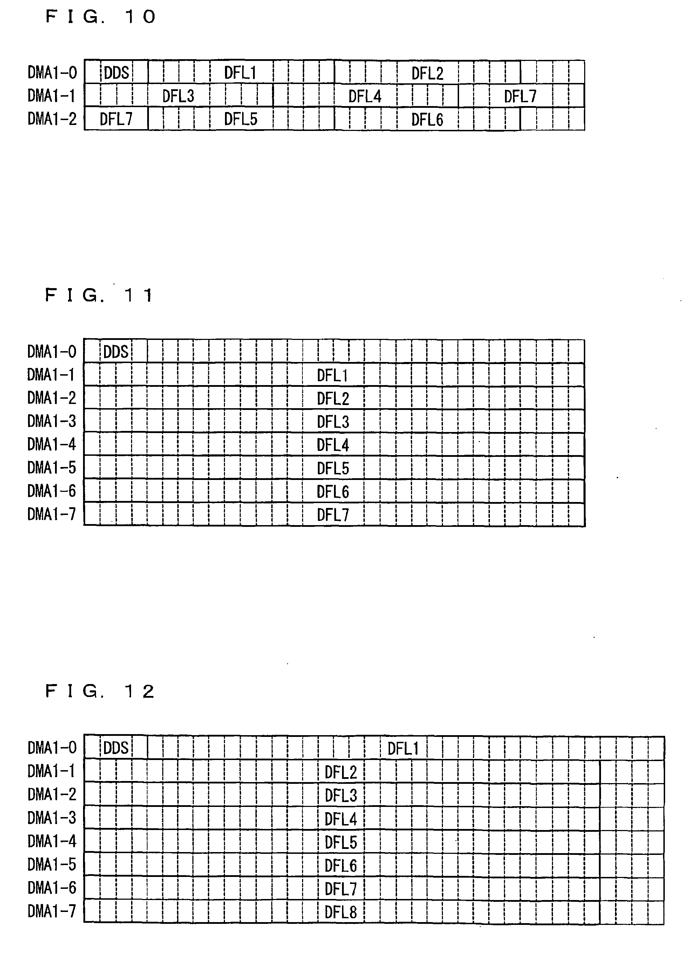

   Fig. 10 is a pattern diagram of management information recorded on layers L0 to L2 of an information recording medium according to another embodiment of the present invention.
Fig. 11
   Fig. 11 is a pattern diagram of management information recorded on layers L0 to L7 of an information recording medium according to still another embodiment of the present invention.
Fig. 12
   Fig. 12 is a pattern diagram of management information recorded on layers L0 to L7 of an information recording medium according to still another embodiment of the present invention.
Fig. 13
   Fig. 13 is a pattern diagram of information recorded on a conventional information recording medium, (a) of Fig. 13 showing various types of information recorded on the conventional information recording medium, (b) of Fig. 13 showing management information recorded on the conventional information recording medium.

### Reference Signs List

1 Optical disc (information recording medium)
2 Pick-up
3 Reproduction circuit (management information acquisition means)
4 Decoding circuit (management information acquisition means)
5 Recording/reproduction control circuit (management information acquisition means, management information recording means)
6 Servo circuit (management information acquisition means, management information recording means)
7 Control circuit (management information acquisition means, propriety judging means, management information recording means, area status judging means)
8 Management information acquisition section (management information acquisition means)
9 Management information recording control section (management information recording control means)
10 Recording section
20 Optical disc recording/reproduction device (recording/reproduction device)
81 DDS acquisition section (management information acquisition means)
82 Propriety judging section (propriety judging means)
83 DFL acquisition section (management information acquisition means)
91 Access layer selection section (management information recording control means)
92 Area status judging section (area status judging means)
93 Management information area selection section (management information recording control means)
L0, L1, L2 Layer (recording layer)
DMA1-0, DMA1-1, DMA1-2 Defect management area (management area)
DMA2-0, DMA2-1, DMA2-2 Defect management area (management area)
DMA3-0, DMA3-1, DMA3-2 Defect management area (management area)
DMA4-0, DMA4-1, DMA4-2 Defect management area (management area)
DDS Disc definition structure (management information recording area, management information, defect management information)
DFL1 to DFL8 Defect list (management information recording area, management information, defect management information)
ISAO to ISO2 Inner spare area (spare area)
OSAO to OSA2 Outer spare area (spare area)

### Description of Embodiments

An embodiment of the present invention is described below with reference to Figs. 1 through 12.

### [Embodiment 1]

First, various types of information that are recorded on an optical disc (information recording medium) 1 according to an embodiment of the present invention are described with reference to Fig. 1. The present embodiment describes an optical dick as an example of the embodiment, but is not intended to restrict the scope of the present invention to an optical disc.

Fig. 1 is a pattern diagram of various types of information recorded in recording areas on three layers (recording layers) L0, L1, and L2 of the optical disc 1.

Although the present embodiment shows an example of a rewritable optical disc having three layers, the scope of application of the present invention is not limited to a three-layer medium, and encompasses a two-layer medium and an information recording medium including four or more recording layers.

Further, as shown in Fig. 1, it is assumed that the optical disc 1 is constituted by the three layers L2, L1, and L0, with the three layers L2, L1, and L0 arranged in this order starting from the side on which scanning laser light is incident. The various types of information recorded on the respective layers are described below.

First, the system information is information necessary for an optical disc recording/reproduction device (recording/reproduction device) 20 described in a later embodiment to properly execute various types of control, and examples of the system information recorded include recording/reproduction conditions. The layers L0, L1, and L2 have identical information recorded thereon. For this reason, even if it becomes impossible to read the information on one of the layers, it is possible to read the information on another one of the layers.

The defect management areas (the term "defect management area" being hereinafter omitted as needed; management areas) DMA1-0, DMA1-1, and DMA1-2, the defect management areas (management areas) DMA2-0, DMA2-1, and DMA2-2, the defect management areas (management areas) DMA3-0, DMA3-1, and DMA3-2, and the defect management areas (management areas) DMA4-0, DMA4-1, and DMA4-2 are management areas that are recording areas on the layers L0 to L2 in which to record management information for managing recording and reproduction of information on the optical disc 1. Possible examples include areas in which to record management information for use in a process for recording information in place of a recording area made incapable of recording due to a defect or scratch, i.e., areas in which to record management information for use in a spare process.

It should be noted here, as shown in Fig. 2, that the defect management areas (management areas) are such that DMA1-0, DMA1-1, and DMA1-2 (management areas), respectively allotted to the layers L0, L1, and L2, constitute a set of management areas that serves as a recording area. That is, "DMA1-0", "DMA1-1", and "DMA1-2" means the "first DMA on the layer L0", the "first DMA on the layer L1", and the "first DMA on the layer L2", respectively.

It should be noted that four areas DMA on an identical layer, i.e., DMA1-0 to DMA4-0 on the layer L0 have identical information recorded therein. For this reason, even if it becomes impossible to read the information in one of the areas, it is possible to read the information in another one of the areas. Similarly, DMA1-1 to DMA4-1 on the layer L1 have identical information recorded therein. Furthermore, DMA1-2 to DMA4-2 on the layer L2 have identical information recorded therein. That is, areas DMA on an identical layer have identical information recorded therein. However, each layer has recorded thereon information different from that recorded on another layer. For example, DMA1-0 has recorded therein information different from that recorded in DMA1-1.

The inner spare areas (spare areas) ISAO to ISA2 and the outer spare areas (spare areas) OSA0 to OSA2 are areas in which to record information through a spare process, i.e., spare areas. These spare areas may be used in order, from the one on the inner side of the layer L0, or a spare area near a defect area may be used.

It is preferable, as described above, that the management information contain defect management information that is information for performing defect management on the optical disc 1. The "defective management information" may be any information, such as a disc definition structure DDS and a defect list DFL that are recorded in a defect management area DMA which is an example of a management area, provided it is information necessary for a spare process.

The defect management areas DMA are areas in which to record information for performing defect management, i.e., management information for use in a spare process. Specifically, in cases where a defect such a scratch makes a recording area on the optical disc 1 incapable of recording/reproduction, the address of the area (defect area) made incapable of recording/reproduction is recorded as defect information in the defect management areas DMA. Furthermore, in cases where a spare area is prepared to replace the defect area, the address of the spare area is recorded in the defect management areas DMA.

Further, although the "defect management information" is information for such defect management in the medium as recording the address of the area made incapable of recording/reproduction (defect area) as defect information, it is a concept that encompasses information processing which cannot be called a "spare process" in a precise sense.

Next, a user recording area on the layer L0 has only user information 1 and user information 2 recorded therein, and the remaining portion of the user recording area and user recording areas on the layers L1 and L2 serve as unrecorded areas.

The three areas DMA1-0, DMA1-1, and DMA1-2 constitute a set of management areas, which is described in Fig. 2. It should be noted here that for each of the areas DMA1-0, DMA1-1, and DMA1-2, an area corresponding to 32 clusters is secured. A cluster means a minimum unit capable of recording/reproduction, and one cluster equals 64K bytes. As shown in Fig. 2, the 96-cluster recording area constituted by DMA1-0 to DMA1-2 is divided into recording areas in which to record seven pieces of information, namely a disc definition structure (the term "disc definition structure" being hereinafter omitted as needed; management information recording area, management information, defect management information) DDS and defect lists (the term "defect list" being hereinafter omitted as needed; management information recording area, management information, defect management information) DFL1 to DFL6, i.e., into a plurality of management information recording areas. The other recording areas are not used in the present embodiment. As described above, in the optical disc 1, the plurality of management information recording areas has each been placed as a continuous area on an identical layer according to at least the recording capacity of the management areas to such a limit as to be able to be placed without interlayer separation.

Recorded in the first four clusters of DMA1-0 is DDS, which is a disc definition structure.

A specific example of management information that is recorded in DDS is described below with reference to Fig. 3, which shows an example of management information that is recorded in DDS. DDS_ID is an identifier for identifying DDS. Let it be assumed that the present embodiment uses a character string "DS" as DDS_ID.

DFL_ADR is the starting physical address of a defect list DFL being used. SP_FULL is information that indicates a spare area which has been made full as a result of being used for a spare process. ISA_SIZE is the size of ISAO to ISA2. OSA_SIZE is the size of OSAO to OSA2.

Recorded in twelve clusters following DDS in DMA1-0 is DFL1.

A specific example of management information that is recorded on a defect list DFL is described below with reference to Fig. 4, which shows an example of management information that is recorded on a defect list DFL. DFL_ID is an identifier for identifying the defect list DFL. Let it be assumed that the present embodiment uses a character string "DF" as DFL_ID.

DFL_UC indicates the number of update counts in the defect list DFL. That is, DFL_UC is 0 at the time of initialization, and has 1 added thereto every time the defect list DLF is updated.

N_DFL is the number of spare clusters registered on the defect list DFL. ADR1, ADR2, ..., and ADRAM are spare address information composed of the address of a spare source and the address of a spare destination. TRM is a termination symbol. Let it be assumed that 00H is recorded after the termination symbol up to a cluster border. The number of spare clusters N_DFL is 0 when the optical disc 1 starts to be used, and increases as the optical disc is used. Similarly, the number of pieces of spare address information ADR also gradually increases.

The size of an area in which DFL is recorded increases in proportion to the number of layers of the optical disc 1. This is because the larger the number of user-recordable areas becomes, the larger the number of defects contained in those areas becomes. For example, in the case of an optical disc having only one layer, it is enough for DFL1 to have a size corresponding to four clusters, whereas an optical disc having three layers as in the case of the optical disc 1 of the present embodiment requires twelve clusters.

Recorded in twelve clusters following DFL1 in DMA1-0 is DFL2. DFL2 is used in place of DFL1 in cases where recording cannot be performed on DFL1 or in cases where DFL1 has been overwritten a predetermined number of times or more.

The number of times DFL1 has been overwritten can be found by reading out the number of update counts in DFL1 as recorded as DFL_UC. For example, when 1,000 times of overwriting are guaranteed, DFL1 is used until DFL_UC reaches 1,000, and DFL2 may be used thereafter. Further, when DFL2 comes to be used in place of DFL1, the leading physical address of DFL2 is recorded in DFL_ADR of DDS. This makes it possible to recognize that DFL has become unusable and DFL2 is being used in place of DFL1.

Four clusters following DFL2 in DMA1-0 serve as an unused area in the present embodiment. As mentioned above, the optical disc 1, which has three layers, requires a defect list DFL whose size corresponds to twelve clusters. However, DMA1-0, in which DDS, DFL1, and DFL2 have been recorded, has only four remaining clusters. Therefore, an attempt to further record DFL3 after DFL2 makes it necessary to a portion of DFL3 in the four cluster and record the remaining portion of DFL3 in eight clusters of DMA1-1 on the layer L1.

It should be noted here that a spare process is possible only after a defect list DFL has all information corresponding to twelve clusters as shown in Fig. 4, and is impossible with the first four clusters alone. Therefore, when DFL3 is recorded in such a way as to be contained in both DMA1-0 and DMA1-1, a spare process raises the need for always accessing both the layers L0 and L1 to read the information recorded in DMA1-0 and DMA1-1.

The same applies to cases where DFL3 is recorded. It takes a long time to move a scanning light spot location between the layer L0 and the layer L1, i.e., to make an interlayer jump, because it becomes necessary to make an optical adjustment and the like to a change in cover layer thickness in addition to moving the scanning light spot location between the layer L0 and the layer L1.

Furthermore, because it is necessary to first record a portion of DFL3 on the layer L0 and then record the remaining portion of DFL3 on the layer L1, an erroneous operation of powering down the device before completion of the recordings leaves DFL3 only partly updated. Because a spare process cannot be performed with such an incomplete defect list DFL, it becomes completely impossible to perform recording/reproduction on the disc.

In the present embodiment, DFL3 is recorded at the head of DMA1-1 as shown in Fig. 2; therefore all the information on DFL3 is recorded on the layer L1. This makes it unnecessary to make an interlayer jump and possible to perform recording or reproduction on DFL3 in a short amount of time. Further, since DFL3 is recorded in twelve consecutive clusters, the recording is completed in a short amount of time. This greatly reduces the probability of occurrence of an erroneous operation, for example, of turning off the power in the process of recording. This is an advantage brought about by the fact that an area in which DFL3 is recorded has been secured by dividing DMA1-1 and the area thus secured has been placed as a continuous area on an identical layer according to at least the recording capacity of the management areas to such a limit as to be able to be placed without interlayer separation.

Further, as for DFL4 to DFL6, all the information is contained only in one of the layers L0, L1, and L2, as in the case of DFL3. In this way, every defect list DFL is recorded continuously on an identical layer. This makes it possible to quickly perform recording and reproduction without making an interlayer jump for any defect list DFL.

In summary, an optical disc 1 includes a plurality of recording layers L0 to L2 having thereon management areas divided into a plurality of management information recording areas, the management areas being recording areas on the layers L0 to L2 in which to record management information for managing recording and reproduction of information on the optical disc 1.

Incidentally, in cases where a particular management information recording area extends across more than one layers (recording layers), it becomes necessary to move the scanning light spot location between one layer and another, i.e., to make an interlayer jump, in order to read all management information (set of management information), such as defect management, necessary for management of recording/reproduction on the optical disc 1.

Such an interlayer jump makes it necessary to make an optical adjustment and the like to a change in cover layer thickness in addition to moving the scanning light spot location between one layer and another, thus requiring a long time.

Furthermore, in recording such management information on the optical disc 1 through the optical disc recording/reproduction device 20, it is necessary to first record a portion of the management information on a particular recording layer and then record the remaining portion of the management information on another recording layer. However, an erroneous operation of powering down the recording/reproduction device before completion of the recordings leaves the management information only partly updated. Because appropriate management of recording/reproduction on the optical disc 1, such as a spare process, cannot be performed with such incomplete management information, it becomes completely impossible to perform recording/ reproduction on the information recording medium.

Here, in the optical disc 1, the plurality of management information recording areas have each been placed as a continuous area on an identical layer according to at least the recording capacity of the management areas to such a limit as to be able to be placed without interlayer separation.

With this, a management information recording area has been placed as a continuous area on an identical layer according to at least the recording capacity of the management areas to such a limit as to be able to be placed without interlayer separation. This makes it unnecessary to make an interlayer jump and possible to perform recording or reproduction on the management information in a short amount of time. Further, since the management information is recorded in a continuous area, the recording is completed in a short amount of time. This greatly reduces the probability of occurrence of an erroneous operation, for example, of turning off the power in the process of recording.

As described above, when a management information recording area in management areas is placed as a continuous area on an identical recording layer according to the recording capacity of the management areas to such a limit as to be able to be placed without interlayer separation, preferential use of the continuous area on the identical layer makes it hardly necessary to make an interlayer jump, thus making quick recording/reproduction possible.

This makes it possible to provide an information recording medium having two or more recording layers and yet being capable of quick and appropriate recording/reproduction.

### [Embodiment 2]

Another embodiment of the present invention is described below with reference to Figs. 5 through 9. It should be noted that the present embodiment is identical to Embodiment 1 except for those components described below. Further, for convenience of explanation, members having the same functions as those shown above in the drawings of Embodiment 1 are given the same reference numerals, and are not described below.

First, Fig. 5 is a block diagram schematically showing the configuration of an optical disc recording/reproduction device 20 according to an embodiment of the present invention. Further, Fig. 6 is a block diagram showing the configuration of a control circuit 7 of the optical disc recording/reproduction device 20.

As shown in Fig. 5, the optical disc recording/reproduction device 20 includes a pick-up 2, a reproduction circuit (management information acquisition means) 3, a decoding circuit (management information acquisition means) 4, a recording/reproduction control circuit (management information acquisition means, management information recording means) 5, and a servo circuit (management information acquisition means, management information recording means) 6, and the control circuit (management information acquisition means, propriety judging means, management information recording means, area status judging means) 7.

Further, as shown in Fig. 6, the control circuit 7 includes a management information acquisition section (management information acquisition means) 8, a management information recording control section (management information recording control means) 9, and a recording section 10.

As shown in Fig. 6, the management information acquisition section 8 includes a DDS acquisition section (management information acquisition means) 81, a propriety judging section (propriety judging means) 82, and a DFL acquisition section (management information acquisition means) 83.

As shown in Fig. 6, the management information recording control section 9 includes an access layer selection section (management information recording control means) 91, an area status judging section (area status judging means) 92, and a management information area selection section (management information recording control means) 93.

The optical disc 1 is an optical disc having three rewritable layers. Information is recorded and reproduced by laser light with which the optical disc 1 is irradiated by the pick-up 2.

Information read out by the pick-up 2 is amplitude-adjusted by the reproduction circuit 3 and subjected to a predetermined filtering process. Output of the reproduction circuit 3 is sent to the decoding circuit 4. The decoding circuit 4 performs a decoding process on the output of the reproduction circuit 3 in a prescribed manner, and converts it into binarized data having two levels of "1" and "0". Although there are various methods devised for the decoding process, PRML (Partial Response Maximum Likelihood) decoding is generally used in performing reproduction on an optical disc high in recording density. The PRML decoding, by which the decoding process is performed on the assumption of intersymbol interference due to density growth, makes it possible to decode even a reproduction signal that has deteriorated in signal quality due to intersymbol interference.

Output of the decoding circuit 4 is sent to the control circuit 7 and outputted to the outside. The control circuit 7 sends instructions to the servo circuit 6 and the recording/reproduction control circuit 5 in accordance with the output of the decoding circuit 4. The control circuit 7 is constituted by a CPU (central processing unit), a ROM in which a program has been stored, and a RAM necessary for a control process. The servo circuit 6 executes control such as focusing, tracking, access control, and an interlayer jump in accordance with the instructions from the control circuit 7. The recording/reproduction control circuit 5 controls recording and reproduction of information on the optical disc 1 in accordance with the instructions from the control circuit 7.

The following schematically describes the functions of the optical disc recording/reproduction device 20. The optical disc recording/reproduction device 20 is suitably configured as a recording/reproduction device for the optical disc 1, described in Embodiment 1, which includes a plurality of recording layers L0 to L2 having thereon management areas divided into a plurality of management information recording areas, the management areas being recording areas on the layers L0 to L2 in which to record management information for managing recording and reproduction of information on the optical disc 1.

A process for recording through the optical disc recording/reproduction device 20 is configured to record each of the plurality of management information recording areas as a continuous area on an identical recording layer according to at least the recording capacity of the management areas to such a limit that the management information recording area is able to be placed without interlayer separation. Specifically, it is only necessary to set DFL_ADR, which is the starting physical address of a defect list DFL in the disc definition structure DDS, so that the functions can be fulfilled.

Therefore, the optical disc recording/reproduction device 20 is configured so that what has been described of the aforementioned optical disc 1 can be similarly realized. This makes it possible to provide an optical disc recording/reproduction device 20 for an optical disc 1 having two or more recording layers and yet being capable of quick and appropriate recording/ reproduction.

Further, the optical disc recording/reproduction device 20 is configured to preferentially use an area, among the plurality of management information recording areas on the optical disc 1, which is placed as a continuous area on an identical recording layer. Specifically, it is only necessary to set DFL_ADR, which is the starting physical address of a defect list DFL in the disc definition structure DDS, so that the functions can be fulfilled.

With this, a management information recording area where management information can be recorded continuously on an identical layer is preferentially used and, after the management information recording area is exhausted, a management information recording area separated between more than one layers is used. This makes it possible to prevent an increase in recording/reproduction time due to an interlayer jump, and to increase the total number of times the management information recording areas are overwritten.

Next, a process by which the optical disc recording/reproduction device 20 reads management information on the optical disc 1 is described with reference to Figs. 5 through 7. Fig. 7 is a flow chart concerning the process by which the optical disc recording/reproduction device 20 reads management information on the optical disc 1.

The process for reading management information is usually executed upon insertion of the optical disc 1 into the optical disc recording/reproduction device 20 (START).

First, in Step S1 (the word "Step" being hereinafter omitted), the DDS acquisition section 81 of the management information acquisition section 8 of Fig. 6 moves the pick-up 2 via the servo circuit 6 of Fig. 5 to access DMA1-0. Next, a reproduction signal from the pick-up 2 is processed in the reproduction circuit 3, and then is decoded by the decoding circuit 4. Further, a decoded result is sent to the DDS acquisition section 81 of the control circuit 7, and the DDS acquisition section 81 recognizes (acquires) the content of DMA1-0. Further, the DDS acquisition section 81 temporarily stores, in the recording section 10 (a management information recording portion of which can be constituted by a RAM (random access memory) and the like) contained in the control circuit 7, management information recorded in DMA1-0, and then the process proceeds to S2.

In S2, the DDS acquisition section 81 reads (acquires) DDS from the management information, recorded in DMA1-0, which has been temporarily stored in the recording section 10 by the DDS acquisition section 81, and then sends a read result to the propriety judging section 82. The propriety judging section 82 judges (determines) whether or not DMA1-0 has been properly read, based on whether or not the content of DDS received from the DDS acquisition section 81 coincides with that shown in Fig. 3.

At this point, in cases where DMA1-0 is unreadable, DDS recorded in DMA2-0 is used instead. However, let it be assumed here that DMA1-0 is readable.

In this case, the propriety judging section 82 notifies the DFL acquisition section 83 via the DDS acquisition section 81 that "reading has been done properly", and then the process proceeds to S3. In this example, the DDS acquisition section 81 mediates between the propriety judging section 82 and the DFL acquisition section 83. It is possible that the propriety judging section 82 notifies the DFL acquisition section 83 directly.

It should be noted that possible specific examples of cases where "DMA1-0 is unreadable (cases where the management information is not properly acquired)" include cases where recording has failed due to a defect in laser power at the time of recording and cases where there exists a defect in the management information recording area. Even in such a case, the management information recording area is not subjected to a spare process unlike a user recording area; therefore, the management information is not properly acquired.

In this case, since DMA1-0 has been normally read, it is not necessary to necessarily read management information recorded in the remaining three areas DMA2-0 to DMA4-0 (all having identical management information recorded therein) on the layer L0.

In S3, the DFL acquisition section 83 reads DFL_ADR of DDS as temporarily stored in the recording section 10, and then the process proceeds to S4.

As shown in Fig. 2, DMA1-0 has recorded as DFL_ADR therein the starting physical address of a defect list DFL, among the six DFL areas DFL1 to DFL6, which is to be used. Recognition of the starting physical address of the defect list DFL to be used makes it possible to also recognize a layer on which the defect list DFL to be used exists.

In S4, the DFL acquisition section 83 judges whether or not the defect list DFL to be used exists on the layer L0. When the defect list DFL to be used exists on the layer L0, the process proceeds to S6. On the other hand, when the defect list DFL to be used does not exist on the layer L0, the process proceeds to S5. It is necessary for the DFL acquisition section 83 to perform an operation for judging whether or not the defect list DFL to be used exists on the layer L0, because when DDS has been recorded on the layer L0 but the defect list DFL to be used does not exist on the layer L0 it is necessary to access a layer different from the layer L0, on which DDS has been recorded.

In S5, on judging that the defect list DFL does not exist on the layer L0, the DLF acquisition section 83 drives the servo circuit 6 to execute an interlayer jump, and then the process proceeds to S6. More specifically, the interlayer jump is to move the light spot location from one layer to another by moving an objective lens contained in the pick-up 2.

For example, since DFL1 to DFL6 are arranged as shown in Fig. 6, an interlayer jump to the layer L1, an interlayer jump to the layer L2, and no interlayer jump are executed when DFL3 or DFL4 needs to be used, when DFL5 or DFL6 needs to be used, and when the defect list DFL to be used exists on the layer L0, respectively.

In S6, the DFL acquisition section 83 drives the servo circuit 6 to access the starting physical address of the defect list DFL as read from DFL_ADR, and then the process proceeds to S7.

In S7, the DFL acquisition section 83 reads DFL via the reproduction circuit 3 and the decoding circuit 4, and then the process proceeds to "END".

Here, as shown in Fig. 2, a defect list DFL of the optical disc 1 for use in the present embodiment has been placed continuously on an identical layer. Therefore, in reading the defect list DFL, it is only necessary to read twelve clusters following one after the other from the starting physical address of the defect list DFL.

Since the optical disc recording/reproduction device 20 according to the present embodiment is used in combination with an optical disc 1 having defects lists DFL arranged as shown in Fig. 2, it is possible to read out the defect list DFL together without being interrupted by an interlayer jump.

Further, the recording section 10 (a program recording portion of which is preferably constituted by a ROM (read random memory)) contained in the control circuit 7 has stored therein a program for the reading process, and the program is realized by executing it through a CPU (central processing unit; not shown). As a result of the reading process, all information necessary for a spare process has been read by the optical disc recording/reproduction device 20; therefore, an appropriate spare process can be executed thereafter.

As described above, the management information acquisition section 8 (DDS acquisition section or DFL acquisition section 83) of the optical disc recording/reproduction device 20 can be configured such that the 96-cluster recording area constituted by DMA1-0 to DMA1-2 on the layers L0 to L2 of the optical disc 1 is divided into the areas in which to record the seven pieces of information, namely DDS and DFL1 to DFL6, and that DDS and DFL1 to DFL6 are each placed as a continuous area on an identical recording layer according to the recording capacity of DMA1-0 to DMA1-2 to such a limit as to be able to be placed without interlayer separation, so as to preferentially acquire the management information from the areas in which to record the seven pieces of information.

For example, the propriety judging section (propriety judging means) 82 is configured to judge, in accordance with DDS acquired by the DDS acquisition section 81, whether or not the management information (management information) recorded in DMA1-0 has been properly acquired.

When the propriety judging section 82 judges that the management information recorded in DMA1-0 has not been properly acquired, the DDS acquisition section 81 only needs to acquire the management information from DMA1-1, which is next highest in priority.

With this, the DDS acquisition section 81 preferentially acquires the management information from an area, among the plurality of management information recording areas, which is placed as a continuous area on an identical recording layer, and the propriety judging section 82 judges whether or not the management information acquired by the DDS acquisition section 81 has been properly acquired.

Further, the optical disc recording/reproduction device 20 may be configured such that the propriety judging section (propriety judging means) 82 judges whether or not DFL1 acquired by the DFL acquisition section 83 has been properly acquired.

In this case, when the propriety judging section 82 judges that DFL1 has not been properly acquired, the DFL acquisition section 83 only needs to acquire the management information from DMA1-1, which is next highest in priority.

With this, the DFL acquisition section 83 preferentially acquires the management information from an area, among the plurality of management information recording areas, which is placed as a continuous area on an identical recording layer, and the propriety judging section 82 judges whether or not the management information acquired by the DDS acquisition section 81 has been properly acquired.

With all this, when a management information recording area where management information can be recorded continuously on an identical layer is preferentially used and, after the management information recording area is exhausted, a management information recording area separated between more than one layers is used, it is possible to prevent an increase in recording/reproduction time due to an interlayer jump, and to increase the total number of times the management information recording areas are overwritten.

Further, since the propriety judging section 82 judges whether or not the management information has been properly acquired, it becomes possible to acquire the management information in an appropriate management information area.

Next, an operation concerning a process by which the optical disc recording/reproduction device 20 records management information is described with reference to Figs. 5, 6, 8, and 9. Figs. 8 nd 9 are each a flow chart of the operation concerning the process for recording management information.

The process for recording management information is usually executed when the need to update DDS and a defect list DFL in response to a defect in a recording area of the optical disc 1 arises. During reproduction or the like of user information, the recording process may be performed in spare time with priority given to the reproduction.

A general flow of the process for recording management information is described with reference to Fig. 8 first, and then a detailed flow of the process of recording management information is described with reference to Fig. 9.

First, in S11, the servo circuit 6 is instructed by the control circuit 7 to move the pick-up 2 to access DMA1-0, and then the process proceeds to S12. Further, the optical disc recording/reproduction device 20 is configured such that in cases where recording/reproduction has been performed on a layer other than the layer L0, an interlayer jump to the layer L0 is executed as well.

In S12, the control circuit 7 provides the recording/reproduction control circuit 5 with information on DDS, DFL1, and DFL2 to be recorded, and the recording/reproduction control circuit 5 outputs, to the pick-up 2, a recording signal obtained by converting these pieces of information into pulse strings. In accordance with these pulse strings, the pick-up 2 causes its laser to emit light so that DDS, DFL1, and DFL2 are recorded on the optical disc 1. Then, the process proceeds to S13.

It should be noted here that the optical disc recording/reproduction device 20 is configured not to record all of DDS, DFL1, and DFL2 but to record only one of them that needs to be updated. For example, DDS is updated in cases where DFL_ADR or SP_FULL has been changed. With this, DDS is not updated in other cases; therefore, (updating) recording of DDS is not executed in Step S12.

Meanwhile, in cases where DFL1 is replaced by DFL2 because DFL1 has been overwritten a predetermined number of times or more, DFL_ADR of DDS is updated. Accordingly, DDS is recorded (updated) in Step S12. Further, as for DFL1 and DFL2, only the defect list DFL being used is updated.

That is, in cases where DFL1 is being used and DFL2 is not being used, only DFL1 is recorded (updated) in Step S12. Similarly, in cases where DFL2 is being used and DFL1 is not being used, only DFL2 is recorded (updated) in Step S12, and DFL1 is not recorded (updated).

In S13, the control circuit 7 determines whether or not all the management information has been recorded. In cases where all the management information has been recorded, the process proceeds to "YES", thus proceeding to "END". On the other hand, in cases where a portion of the management information has not been recorded, the process proceeds to S14.

In S14, where only DMA1-0 has been recorded as a result of the foregoing flow, the control circuit 7 drives the servo circuit 6 to access the next area, execute recording through Step S12, repeats the foregoing flow, finishes recording in all the management information areas, and then finishes the recording process, thus proceeding to "END". It should be noted here that DMA2-0, which is on the same layer L0, is selected as the next area.

Thereafter, recording is performed on the management information areas DMA3-0 and DMA4-0 on the same layer L0, and then recording is performed on the management information areas on the layer L1 and the management information areas on the layer L2. However, since the layers L1 and L2 have DFL3 to DFL6 recorded thereon, it is not necessary to execute access or recording, unless these defect lists DFL are being used. It should be noted that it is the control circuit 7 that determines whether or not all the management information has been recorded.

Next, a detailed flow of an operation concerning a process by which the optical disc recording/reproduction device 20 records management information is described with reference to Fig. 9.

First, as in the flow of Fig. 8, the process for recording management information is usually executed when the need to update DDS and a defect list DFL in response to a defect in a recording area of the optical disc 1 arises. During reproduction or the like of user information, the recording process may be performed in spare time with priority given to the reproduction.

In S21, the access layer selection section 91 of Fig. 6 drives the servo circuit 6 to access the layer L0, and then the process proceeds to S22.

In S22, the area status judging section 92 confirms the status of occurrence of an error in DSS with reference to information concerning the "number of update counts and the status of occurrence of errors in DDS and each defect list DFL" recorded in the recording section 10, and then the process proceeds to S23. It should be noted that the information concerning the "number of update counts and the status of occurrence of errors in DDS and each defect list DFL" is such that the occurrence of errors is recorded in the recording section 10 in cases where the propriety judging section 82 has judged, in an operation concerning the process, described with reference to Fig. 7, by which the optical disc recording/reproduction device 20 reads, that "reading has not been done properly". Further, the number of update counts in each disc definition structure DSS only needs to be recorded in the recording section 10 when the disc definition structure DSS is updated as described with reference to Fig. 7; at the same time, the number of update counts in each defect list DFL is also recorded (see DFL_UC of Fig. 4).

In cases where the area status judging section 92 has judged in S23 that "an error has occurred in DDS (e.g., cases where a defect in DDS has been caused)", the process proceeds to "YES", thus proceeding to S24.

In S24, the access layer selection section 91 drives the servo circuit 6 to change the access destination to the layer L1. Thereafter, the same flow as the flow of Fig. 9 is repeated.

On the other hand, in cases where the area status judging section 92 did not judge in S23 that "an error has occurred in DDS (e.g., cases where a defect in DDS has been caused)", the process proceeds to "NO", thus proceeding to S25.

In S25, the area status judging section 92 confirms the status of occurrence of errors and the number of update counts in DFL1 with reference to the information concerning the "number of update counts and the status of occurrence of errors in DDS and each defect list DFL" recorded in the recording section 10, and then the process proceeds to S26.

In cases where the area status judging section 92 has judged in S26 that "an error has occurred in DFL1", the process proceeds to "YES", thus proceeding to S27.

On the other hand, in cases where the area status judging section 92 did not judge in S26 that "an error has occurred in DFL1", the process proceeds to "NO", thus proceeding to S29.

In S29, the area status judging section 92 confirms, with reference to the information concerning the "number of update counts and the status of occurrence of errors in DDS and each a defect list DFL" recorded in the recording section 10, whether or not DFL1 has exceeded a predetermined number of update counts.

In cases where the area status judging section 92 has judged in S29 that "DFL1 has exceeded the predetermined number of update counts", the process proceeds to "YES", thus proceeding to S27.

On the other hand, in cases where the area status judging section 92 has judged in S29 that "the number of update counts in DFL1 is not more than the predetermined number of update counts", the process proceeds to "NO", an indication of which is sent to the management information recording control section 9. Then, the process proceeds to S31.

In S31, the management information area selection section 93 receives, from the area status judging section 92, an indication that it has been judged that "the number of update counts in DFL1 is not more than the predetermined number of update counts", and drives the recording/reproduction control circuit 5 to update the management information DFL1. Then, the process proceeds to "END".

Next, in S27, the access layer selection section 91 drives the servo circuit 6 to access DFL2. Next, the area status judging section 92 confirms the status of occurrence of errors in DFL2 with reference to the information concerning the "number of update counts and the status of occurrence of errors in DDS and each defect list DFL" recorded in the recording section 10, and then the process proceeds to S28.

In cases where area status judging section 92 has judged in S28 that "an error has occurred in DFL2 (e.g., cases where a defect in DFL2 has been caused)", the process proceeds to "YES", thus proceeding to S24.

On the other hand, in cases where the area status judging section 92 did not judge in S28 that "an error has occurred in DFL2 (e.g., cases where a defect in DFL2 has been caused)", the process proceeds to "NO", thus proceeding to S30.

In S30, the area status judging section 92 confirms, with reference to the information concerning the "number of update counts and the status of occurrence of errors in DDS and each defect list DFL" recorded in the recording section 10, whether or not DFL2 has exceeded a predetermined number of update counts.

In cases where the area status judging section 92 has judged in S30 that "DFL2 has exceeded the predetermined number of update counts", the process proceeds to "YES", thus proceeding to S24.

On the other hand, in cases where the area status judging section 92 has judged in S30 that "the number of update counts in DFL2 is not more than the predetermined number of update counts", the process proceeds to "NO", an indication of which is sent to the management information recording control section 9. Then, the process proceeds to S32.

In S32, the management information area selection section 93 receives, from the area status judging section 92, an indication that it has been judged that "the number of update counts in DFL2 is not more than the predetermined number of update counts", and drives the recording/reproduction control circuit 5 to update the management information DFL2. Then, the process proceeds to "END".

As described above, it is preferable that the optical disc recording/reproduction device 20 include: the recording/reproduction control circuit 5 that records the management information on the optical disc 1; the area status judging section 92 that judges the number of update counts or the status of occurrence of errors in each of the plurality of management information recording areas when the management information is recorded; and the management information recording control section 9 that, when the area status judging section 92 has made an error judgment indicating that the number of update counts has exceeded a predetermined number of update counts or that an error has occurred in an management information recording area, (i) causes the recording/reproduction control circuit 5 to record the management information in a management information recording area about which the error judgment was not made, the management information recording area being different from a management information recording area about which the error judgment has been made, and (ii) updates, to an effective recording area, an area in which the number of update counts is not more than the predetermined number of update counts, the area being among management information recording areas about which the error judgment has been made.

The foregoing configuration makes it possible to change, according to the number of update counts or the error status, from recording the management information in a management information recording area about which an error judgment has been made to recording the management information in an appropriate management information recording area. That is, the number of times of overwriting can be found from the number of update counts in the management information recording area, and the management information recording area can be replaced by another when the number of times of overwriting is not less than a certain value or a defect or the like has made it no longer possible to properly read the management information from the management information recording area.

Such replacement of one management information recording area by another makes it possible to overcome the limits of number of times of overwriting, and to perform recording/reproduction through a spare process with high reliability by avoiding problems such as defects.

### [Embodiment 3]

Still another embodiment of the present invention is described below with reference to Fig. 10. It should be noted that the present embodiment is identical to Embodiments 1 and 2 except for those components described below. Further, for convenience of explanation, members having the same functions as those shown above in the drawings of Embodiments 1 and 2 are given the same reference numerals, and are not described below.

An optical disc of the present embodiment has defect lists DFL arranged as shown in Fig. 10. DDS, DFL1, DFL2, DFL3, and DFL4 are identical to those shown in Embodiment 1, except that DFL4 is followed by a portion of DFL7.

Recorded in the first four clusters of DMA1-2 is the remaining portion of DFL7, followed by DFL5 and DFL6.

The present embodiment differs from Embodiment 1 in that DFL7 is contained in both the layer L1 and the layer L2. For this reason, as stated above, use of DFL7 requires an interlayer jump between the layer L1 and the layer L2. However, whereas Embodiment 1 can only secure six defect lists DFL, Embodiment 2 advantageously secures seven defect lists DFL. Assuming that one defect list DFL can be overwritten 1,000 times, seven defect lists DFL means that a total of 7,000 times of overwriting is possible, whereas six defect list DFL means that a total of only 6,000 times of overwriting makes the optical disc unusable.

Furthermore, since it is DFL7 that is contained in both the layer L1 and the layer L2, DFL7 is the last DFL to be used. All of DFL1 to DFL6 other than DFL7 are each recorded continuously on an identical layer. For this reason, also in Embodiment 2, all the information on each defect list DFL is contained in one layer. Therefore, no interlayer jump is needed during use of DFL1 to DFL6, and it does not take a longer time for recording/reproduction as compared with Embodiment 1.

That is, defect lists DFL each recorded continuously on an identical layer is preferentially used, and, after the defect lists DFL are exhausted, a defect list DFL contained in two layers is used. This makes it possible to prevent an increase in recording/reproduction time due to an interlayer jump, and to increase the total number of times the defect lists DFL are overwritten.

Also in the case of use of the optical disc 1 according to Embodiment 2, the optical disc recording/reproduction device 20 operates substantially in the same manner. However, in the case of recording/reproduction of DFL7, it is necessary to first record/reproduce a portion of DFL7 on the layer L1 and then make an interlayer jump to the layer L2 to record/reproduce the remaining portion of DFL7, because the former portion of DFL7 exists on the layer L1 and the latter portion of DFL7 exists on the layer L2.

It is only necessary that these additional processes for DFL7 be stored as a program in the ROM of the control circuit 7.

In summary, the optical disc 1 may be such that one or more of the plurality of management information recording areas have each been placed separately on at least two or more of the plurality of recording layers.

With this, in the optical disc 1, in which the plurality of management information recording areas into which the management areas have been divided have each been placed or are each placed as a continuous area on an identical layer according to at least the recording capacity of the management areas to such a limit as to be able to be placed without interlayer separation, one or more of the plurality of management information recording areas has each been placed separately on at least two or more of the plurality of recording layers.

Accordingly, preferential use of a management information recording area placed as a continuous area on an identical recording layer makes it possible to prevent an increase in recording/reproduction time due to an interlayer jump. Further, by effectively using a recording area made unable to be placed as a continuous area on an identical recording layer (by placing one of the plurality of management information recording areas separately on at least two or more of the plurality of recording layers), the total number of times the management information is overwritten can be increased. For example, assuming that one piece of management information can be overwritten 1,000 times, at least 1,000 or more times of overwriting is possible because one of the plurality of management information recording areas has been placed separately on at least two or more of the plurality of recording layers, although an interlayer jump needs to be made.

### [Embodiment 4]

Still another embodiment of the present invention is described below with reference to Figs. 11 and 12. It should be noted that the present embodiment is identical to Embodiments 1, 2, and 3 except for those components described below. Further, for convenience of explanation, members having the same functions as those shown above in the drawings of Embodiments 1, 2, and 3 are given the same reference numerals, and are not described below.

An optical disc 1 of Embodiment 4 is a rewritable eight-layer optical disc having defect lists DFL arranged as shown in Fig. 11. Assuming that the size of a DFL recording area required per layer is four clusters, each defect list DFL requires 32 clusters on eight layers. For this reason, in cases where a management information area on each layer has 32 clusters, the maximum number of layers is limited to eight in order for each defect list DFL to be recorded continuously on an identical layer.

As shown in DFL1 of Fig. 11, it is possible to record a defect list DFL continuously on an identical layer also in the eight-layer optical disc 1. However, in this case, DFL1 is recorded on the layer L1, not on the layer L0. Normally, recording of user information starts from the layer L0, it is desirable that the first defect list DFL to be used, i.e., DFL1 be recorded on the layer L0, too. Recording of DFL1 on the layer L0 brings about an advantage of executing both recording/reproduction of user information and recording/reproduction of management information solely on the layer L0.

Fig. 12 shows an embodiment having DFL1 placed on the layer L0. In Fig. 12, each management information recording area is extended from 32 clusters to 36 clusters so that DFL1 can be recorded continuously on the layer L0. Extension of management areas brings about a disadvantage of consuming extra areas accordingly, but brings about an advantage of placing DFL1 continuously on the layer L0. Whether Fig. 11 or 12 is used may be decided in a comprehensive manner in view of these perspectives.

It should be noted that an information recording medium of the present invention may be an information recording medium including a plurality of recording layers having thereon management areas divided into a plurality of management information recording areas, the management areas being recording areas on the plurality of recording layers in which to record management information for managing recording and reproduction of information on the information recording medium, the plurality of management information recording areas having each been placed as a continuous area on an identical layer according to at least a recording capacity of the management areas to such a limit as to be able to be placed without interlayer separation.

Further, a management information recording method of the present invention may be an management information recording method for an information recording medium including a plurality of recording layers having thereon management areas divided into a plurality of management information recording areas, the management areas being recording areas on the plurality of recording layers in which to record the management information for managing recording and reproduction of information on the information recording medium, the management information method recording the management information on the information recording medium, the management information recording method including the step of recording each of the plurality of management information recording areas as a continuous area on an identical layer according to at least a recording capacity of the management areas to such a limit that the management information recording area is able to be placed without interlayer separation.

Further, the management information may contain defect management information that is information for performing defect management on the information recording medium. The "defective management information" may be any information, such as a disc definition structure DDS and a defect list DFL that are recorded in a defect management area DMA which is an example of a management area, provided it is information necessary for a spare process.

The defect management areas DMA are areas in which to record information for performing defect management, i.e., management information for use in a spare process. Specifically, in cases where a defect such a scratch makes a recording area on the information recording medium incapable of recording/reproduction, the address of the area (defect area) made incapable of recording/reproduction is recorded as defect information in the defect management areas DMA. Furthermore, in cases where a spare area is prepared to replace the defect area, the address of the spare area is recorded in the defect management areas DMA.

Further, although the "defect management information" is information for such defect management in the medium as recording the address of the area made incapable of recording/reproduction (defect area) as defect information, it is a concept that encompasses information processing which cannot be called a "spare process" in a precise sense.

According to the foregoing configuration and method, the information recording medium includes a plurality of recording layers having thereon management areas divided into a plurality of management information recording areas, the management areas being recording areas on the plurality of recording layers in which to record the management information for managing recording and reproduction of information on the information recording medium.

Incidentally, in cases where a particular management information recording area extends across more than one layers (recording layers), it becomes necessary to move the scanning light spot location between one layer and another, i.e., to make an interlayer jump, in order to read all management information (set of management information), such as defect management, necessary for management of recording/reproduction on the information recording medium.

Such an interlayer jump makes it necessary to make an optical adjustment and the like to a change in cover layer thickness in addition to moving the scanning light spot location between one layer and another, thus requiring a long time.

Furthermore, in recording such management information on the information recording medium through the optical disc recording/reproduction device, it is necessary to first record a portion of the management information on a particular recording layer and then record the remaining portion of the management information on another recording layer. However, an erroneous operation of powering down the recording/reproduction device before completion of the recordings leaves the management information only partly updated. Because appropriate management of recording/reproduction on the information recording medium, such as a spare process, cannot be performed with such incomplete management information, it becomes completely impossible to perform recording/reproduction on the information recording medium.

Accordingly, in the information recording medium or management information recording method of the present invention, the plurality of management information recording areas have each been placed or are each placed as a continuous area on an identical layer according to at least the recording capacity of the management areas to such a limit as to be able to be placed without interlayer separation.

According to the foregoing configuration or method, a management information recording area is placed as a continuous area on an identical layer according to at least the recording capacity of the management areas to such a limit as to be able to be placed without interlayer separation. This makes it unnecessary to make an interlayer jump and possible to perform recording or reproduction on the management information in a short amount of time. Further, since the management information is recorded in a continuous area, the recording is completed in a short amount of time. This greatly reduces the probability of occurrence of an erroneous operation, for example, of turning off the power in the process of recording.

As described above, when a management information recording area in a management area is placed as a continuous area on an identical recording layer according to at least the recording capacity of the management areas to such a limit as to be able to be placed without interlayer separation, preferential use of the continuous area on the identical layer makes it hardly necessary to make an interlayer jump, thus making quick recording/reproduction possible.

This makes it possible to provide an information recording medium having two or more recording layers and yet being capable of quick and appropriate recording/ reproduction.

Further, in addition to the foregoing configuration, the information recording medium of the present invention may be such that one or more of the plurality of management information recording areas have each been placed separately on at least two or more of the plurality of recording layers.

Further, in addition to the foregoing configuration, the management information recording method of the present invention may be such that the management information is recorded so that one or more of the plurality of management information recording areas are each separated onto at least two or more of the plurality of recording layers.

According to the foregoing configuration or method, in the information recording medium or management information recording method in which the plurality of management information recording areas into which the management areas have been divided have each been placed or are each placed as a continuous area on an identical layer according to at least the recording capacity of the management areas to such a limit as to be able to be placed without interlayer separation, one or more of the plurality of management information recording areas has each been placed separately on at least two or more of the plurality of recording layers, or the management information is recorded so that one or more of the plurality of management information recording areas are each separated onto at least two or more of the plurality of recording layers.

According to the foregoing configuration or method, preferential use of a management information recording area placed as a continuous area on an identical recording layer makes it possible to prevent an increase in recording/reproduction time due to an interlayer jump. Further, by effectively using a recording area made unable to be placed as a continuous area on an identical recording layer (by placing one of the plurality of management information recording areas separately on at least two or more of the plurality of recording layers), the total number of times the management information is overwritten can be increased. For example, assuming that one piece of management information can be overwritten 1,000 times, at least 1,000 or more times of overwriting is possible because one of the plurality of management information recording areas has been placed separately on at least two or more of the plurality of recording layers, although an interlayer jump needs to be made.

Further, a recording/reproduction device of the present invention may be a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/reproduction device recording each of the plurality of management information recording areas as a continuous area on an identical layer according to at least a recording capacity of the management areas to such a limit that the management information recording area is able to be placed without interlayer separation.

According to the foregoing configuration, the recording/reproduction device records each of the plurality of management information recording areas as a continuous area on an identical layer, if at all possible, according to at least the recording capacity of the management areas to such a limit that the management information recording area is able to be placed without interlayer separation.

Therefore, the recording/reproduction device is configured so that what has been described of the aforementioned information recording medium and management information recording method can be similarly realized. This makes it possible to provide a recording/reproduction device for an information recording medium having two or more recording layers and yet being capable of quick and appropriate recording/ reproduction.

Further, in addition to the foregoing configuration, the recording/reproduction device of the present invention may include: management information recording means that records the management information on the information recording medium; area status judging means that judges the number of update counts or the status of occurrence of errors in each of the plurality of management information recording areas when the management information is recorded; and management information recording control means that, when the area status judging means has made an error judgment indicating that the number of update counts has exceeded a predetermined number of update counts or that an error has occurred in an management information recording area, (i) causes the management information recording means to record the management information in a management information recording area about which the error judgment was not made, the management information recording area being different from a management information recording area about which the error judgment has been made, and (ii) updates, to an effective recording area, an area in which the number of update counts is not more than the predetermined number of update counts, the area being among management information recording areas about which the error judgment has been made.

According to the foregoing configuration, the management information recording means records the management information on the information recording medium. Further, the area status judging means judges the number of update counts or the status of occurrence of errors in each of the plurality of management information recording areas when the management information is recorded.

Furthermore, when the area status judging means has made an error judgment indicating that the number of update counts has exceeded a predetermined number of update counts or that an error has occurred in an management information recording area, the management information recording control means causes the management information recording means to record the management information in a management information recording area about which the error judgment was not made, the management information recording area being different from a management information recording area about which the error judgment has been made.

Meanwhile, the management information recording control means updates, to an effective recording area, an area in which the number of update counts is not more than the predetermined number of update counts, the area being among management information recording areas about which the error judgment has been made.

The foregoing configuration makes it possible to change, according to the number of update counts or the error status, from recording the management information in a management information recording area about which an error judgment has been made to recording the management information in an appropriate management information recording area. That is, the number of times of overwriting can be found from the number of update counts in the management information recording area, and the management information recording area can be replaced by another when the number times of overwriting is not less than a certain value or a defect or the like has made it no longer possible to properly read the management information from the management information recording area.

Such replacement of one management information recording area by another makes it possible to overcome the limits of number of times of overwriting, and to perform recording/reproduction through a spare process with high reliability by avoiding problems such as defects.

Further, a recording/reproduction device of the present invention may be a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/ reproduction device preferentially using an area, among the plurality of management information recording areas, which is placed as a continuous area on an identical layer.

According to the foregoing configuration, a management information recording area where management information can be recorded continuously on an identical layer is preferentially used and, after the management information recording area is exhausted, a management information recording area separated between more than one layers is used. This makes it possible to prevent an increase in recording/reproduction time due to an interlayer jump, and to increase the total number of times the management information recording areas are overwritten.

Further, a recording/reproduction device of the present invention may be a recording/reproduction device for an information recording medium including a plurality of recording layers having thereon management areas divided into a plurality of management information recording areas, the management areas being recording areas on the plurality of recording layers in which to record management information for managing recording and reproduction of information on the information recording medium, the recording/reproduction device including: management information acquisition means that acquires the management information preferentially from an area, among the plurality of management information recording areas, which is placed as a continuous area on an identical layer; and propriety judging means that judges whether or not the management information acquired by the management information acquisition means has been properly acquired, when the propriety judging means judges that the management information has not been properly acquired, the management information acquisition means acquires the management information from a management information recording area of next priority.

According to the foregoing configuration, the management information acquisition means acquires the management information preferentially from an area, among the plurality of management information recording areas, which is placed as a continuous area on an identical layer; and propriety judging means that judges whether or not the management information acquired by the management information acquisition means has been properly acquired.

It should be noted here that possible examples of "cases where the management information is not properly acquired" include cases where recording has failed due to a defect in laser power at the time of recording and cases where there exits a defect in the management information recording area. Even in such a case, the management information recording area is not subjected to a spare process unlike a user recording area; therefore, the management information is not properly acquired.

Further, when the propriety judging means judges that the management information has not been properly acquired, the management information acquisition means acquires the management information from a management information recording area of next priority.

With all this, when a management information recording area where management information can be recorded continuously on an identical layer is preferentially used and, after the management information recording area is exhausted, a management information recording area separated between more than one layers is used, it is possible to prevent an increase in recording/reproduction time due to an interlayer jump, and to increase the total number of times the management information recording areas are overwritten.

Further, since the propriety judging means judges whether or not the management information has been properly acquired, it becomes possible to acquire the management information in an appropriate management information area.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention can be applied to an information recording medium in which various types of information are recorded. Specifically, the present invention can be applied to a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

## Claims

1. An information recording medium comprising a plurality of recording layers having thereon management areas divided into a plurality of management information recording areas, the management areas being recording areas on the plurality of recording layers in which to record management information for managing recording and reproduction of information on the information recording medium,
the plurality of management information recording areas having each been placed as a continuous area on an identical layer according to at least a recording capacity of the management areas to such a limit as to be able to be placed without interlayer separation.

2. The information recording medium as set forth in claim 1, wherein one or more of the plurality of management information recording areas have each been placed separately on at least two or more of the plurality of recording layers.

3. The information recording medium as set forth in claim 1 or 2, wherein the management information contains defect management information that is information for performing defect management on the information recording medium.

4. A recording/reproduction device for an information recording medium comprising a plurality of recording layers having thereon management areas divided into a plurality of management information recording areas, the management areas being recording areas on the plurality of recording layers in which to record management information for managing recording and reproduction of information on the information recording medium,
the recording/reproduction device recording each of the plurality of management information recording areas as a continuous area on an identical layer according to at least a recording capacity of the management areas to such a limit that the management information recording area is able to be placed without interlayer separation.

5. The recording/reproduction device as set forth in claim 4, comprising:
management information recording means that records the management information on the information recording medium;
area status judging means that judges the number of update counts or the status of occurrence of errors in each of the plurality of management information recording areas when the management information is recorded; and
management information recording control means that, when the area status judging means has made an error judgment indicating that the number of update counts has exceeded a predetermined number of update counts or that an error has occurred in an management information recording area, (i) causes the management information recording means to record the management information in a management information recording area about which the error judgment was not made, the management information recording area being different from a management information recording area about which the error judgment has been made, and (ii) updates, to an effective recording area, an area in which the number of update counts is not more than the predetermined number of update counts, the area being among management information recording areas about which the error judgment has been made.

6. A recording/reproduction device for an information recording medium comprising a plurality of recording layers having thereon management areas divided into a plurality of management information recording areas, the management areas being recording areas on the plurality of recording layers in which to record management information for managing recording and reproduction of information on the information recording medium,
the recording/ reproduction device preferentially using an area, among the plurality of management information recording areas, which is placed as a continuous area on an identical layer.

7. A recording/reproduction device for an information recording medium comprising a plurality of recording layers having thereon management areas divided into a plurality of management information recording areas, the management areas being recording areas on the plurality of recording layers in which to record management information for managing recording and reproduction of information on the information recording medium, the recording/reproduction device comprising:
management information acquisition means that acquires the management information preferentially from an area, among the plurality of management information recording areas, which is placed as a continuous area on an identical layer; and
propriety judging means that judges whether or not the management information acquired by the management information acquisition means has been properly acquired,
when the propriety judging means judges that the management information has not been properly acquired, the management information acquisition means acquires the management information from a management information recording area of next priority.

8. A management information recording method for an information recording medium comprising a plurality of recording layers having thereon management areas divided into a plurality of management information recording areas, the management areas being recording areas on the plurality of recording layers in which to record the management information for managing recording and reproduction of information on the information recording medium, the management information method recording the management information on the information recording medium,
the management information recording method comprising the step of recording each of the plurality of management information recording areas as a continuous area on an identical layer according to at least a recording capacity of the management areas to such a limit that the management information recording area is able to be placed without interlayer separation.

9. The management information recording method as set forth in claim 8, wherein the management information is recorded so that one or more of the plurality of management information recording areas are each separated onto at least two or more of the plurality of recording layers.
